# FASCICULE DE BREVET EUROPEEN

(11) **EP 4 636 640 B1**
(45) Date de publication et mention de la délivrance du brevet: **23.09.2026**
(21) Numéro de dépôt: 25169235.6
(22) Date de dépôt: 08.04.2025
(51) Int. Cl.: G06F 30/20, F42B 35/00, G06F 119/02, G06F 119/08

(54) **PROCÉDÉ ET DISPOSITIF DE DÉTERMINATION ET D'UTILISATION D'UN OUTIL DE DIAGNOSTIC COMPRENANT UN SPECTRE DE RÉPONSE EXTRÊME EN TEMPÉRATURE**
VERFAHREN UND VORRICHTUNG ZUR BESTIMMUNG UND VERWENDUNG EINES DIAGNOSESINSTRUMENTS, DAS EIN EXTREMES TEMPERATURREAKTIONSSPEKTRUM UMFASST
METHOD AND DEVICE FOR DETERMINING AND USING A DIAGNOSTIC TOOL COMPRISING AN EXTREME TEMPERATURE RESPONSE SPECTRUM

(30) Priorité: 17.04.2024 FR 2403910
(43) Date de publication de la demande: 22.10.2025
(73) Titulaire: MBDA France, 92350 Le Plessis-Robinson (FR)
(72) Inventeur: LE CORRE, Frédéric, 92350 Le Plessis-Robinson (FR)
(74) Mandataire: Gevers & Orès

(56) Documents cités:
- SORIN VOICULESCU ET AL: "Reliability Estimation in Random Environment: Different Approaches", 2007 PROCEEDINGS, ANNUAL RELIABILITY AND MAINTAINABILITY SYMPSOIUM, 1 January 2007 (2007-01-01), pages 202 - 207, XP055294485, ISBN: 978-0-7803-9767-5, DOI: 10.1109/RAMS.2007.328059

## Description

### Domaine technique

La présente invention concerne un procédé et dispositif de détermination et d'utilisation d'un outil de diagnostic comprenant un spectre de réponse extrême en température.

### Etat de la technique

Bien que non exclusivement, la présente invention s'applique plus particulièrement au domaine militaire, et notamment à tout matériel militaire susceptible d'être soumis à des conditions extrêmes, tel qu'un missile par exemple. Il peut s'agir de tout type de matériel, tel que par exemple des matériels électroniques, pyrotechniques, organiques, des protections thermiques, ...

Pour optimiser la tenue d'un matériel, notamment un matériel militaire, au cours du temps, il est connu de réaliser une démarche de personnalisation (définition au juste besoin) des exigences mécaniques, parfois sévères, auxquelles peut être soumis ou a été soumis ce matériel. En particulier, pour comparer différents environnements mécaniques, il est connu d'utiliser un spectre de réponse aux chocs et un spectre de dommage par fatigue. Ces spectres permettent d'aider à spécifier au juste besoin les contraintes (vibrations, chocs, ...) extrêmement sévères auxquelles le matériel considéré va être exposé ou a été exposé.

Toutefois, en plus d'environnements mécaniques, un matériel peut également être soumis à des environnements climatiques, tels que des températures extrêmes, plus ou moins sévères. Or, pour l'environnement climatique, une démarche de personnalisation du matériel devrait requérir la connaissance des conditions réelles. Il faudrait, pour cela, réaliser des campagnes extrêmement longues (avec la nécessité d'avoir une mesure sur plusieurs années pour les grandeurs météorologiques) en de très nombreux sites à travers le monde (où pourrait être déployé le matériel) pour connaître ces conditions réelles, notamment la température, auxquelles pourrait être soumis le matériel. Une telle solution n'est donc pas envisageable en pratique.

Or, l'absence de prise en compte des conditions thermiques réelles (ainsi que la méconnaissance de l'inertie thermique du matériel) ne permet pas de spécifier au plus juste le matériel et conduit, généralement, à considérer comme beaucoup plus sévères qu'ils ne sont en réalité les environnements auxquels est soumis le matériel considéré. Ceci a pour conséquence que le matériel est conçu et adapté pour supporter des conditions thermiques plus sévères que celles qu'il va réellement rencontrer.

Il existe donc un besoin de trouver une solution permettant de mettre à disposition un outil de diagnostic apte à déterminer l'effet des conditions thermiques, notamment les températures extrêmes auxquelles un matériel va être soumis, en particulier pour réaliser une personnalisation lors de la conception du matériel ou pour évaluer son niveau de sollicitation.

Par ailleurs, on connaît, par un article de Sorin Voiculescu et AI, intitulé « Reliability Estimation in Random Environment: Different Approaches » et publié le 1 janvier 2007 dans « 2007 proceedings, annual reliability and maintainability symposium », une comparaison de différentes méthodes d'étude de la variation de contraintes en temps réel de produits.

### Exposé de l'invention

La présente invention concerne un procédé de détermination et d'utilisation d'un outil de diagnostic, qui permet de répondre au besoin précité, l'outil de diagnostic comprenant au moins un spectre de réponse extrême en température pour une pluralité de types (différents) de matériel.

A cet effet, selon l'invention, ledit procédé comporte au moins les étapes définies dans la revendication 1.

Ainsi, grâce à l'invention, on obtient un spectre de réponse extrême en température qui est représentatif d'une courbe de températures d'une localisation géographique donnée, par exemple une ville, et qui fournit des valeurs de température, notamment extrêmes, en fonction du temps caractéristique qui est représentatif d'un type de matériel considéré. Ainsi, pour un type particulier de matériel, par exemple un équipement d'un missile, on est en mesure de connaître les conditions de température (notamment extrême) auxquelles il a été ou il sera soumis.

On dispose ainsi, en réalisant des comparaisons, par exemple avec les spectres de réponse extrême en température de différentes localisations géographiques ou correspondant à des matériels de types différents, d'un outil de diagnostic qui permet de déterminer les conditions thermiques, notamment les températures extrêmes, auxquelles un matériel va être soumis, en particulier pour réaliser une personnalisation lors de la conception du matériel (afin de l'adapter aux contraintes thermiques rencontrées pour qu'il puisse supporter ces températures sans être surdimensionné) ou pour évaluer son niveau de sollicitation. Cet outil de diagnostic est applicable aux principaux types de matériel (électroniques, pyrotechniques, organiques, protections thermiques, ...) tels qu'utilisés, notamment, dans le domaine militaire.

Avantageusement, ledit ensemble de couples de valeurs (formant le spectre de réponse extrême en température) est représenté sous forme d'une courbe.

En outre, de façon avantageuse, la deuxième sous-étape de l'étape de traitement réalise les opérations suivantes :
- trier les températures de ladite courbe modifiée selon un ordre croissant ; et
- identifier, dans ledit tri, la valeur de température correspondant au paramètre spécifique de température.

Dans un premier mode de réalisation, l'étape de réception et l'étape de traitement sont mises en œuvre pour chacune d'une pluralité de courbes de températures différentes (c'est-à-dire relatives à des localisations géographiques différentes) permettant d'obtenir une pluralité de spectres de réponse extrême en température, et l'étape de comparaison consiste à réaliser des comparaisons à partir au moins de deux de ces spectres de réponse extrême en température.

On est ainsi en mesure de comparer les effets sur un matériel donné ou sur plusieurs matériels donnés des températures, pour plusieurs courbes de températures différentes, c'est-à-dire pour plusieurs localisations géographiques différentes. Ceci permet notamment d'adapter la protection du matériel aux conditions thermiques auxquelles il sera soumis dans une localisation géographique donnée, par exemple une ville ayant des températures très élevées.

Dans un second mode de réalisation, en variante ou en complément du premier mode de réalisation précité, l'étape de traitement est mise en œuvre pour une pluralité de paramètres spécifiques de température (température maximale, température minimale,...) différents permettant d'obtenir une pluralité de spectres de réponse extrême en température, dont chacun est associé à un paramètre spécifique de température, et l'étape de comparaison consiste à réaliser des comparaisons à partir au moins de deux de ces spectres de réponse extrême en température.

Avantageusement, le paramètre spécifique de température correspond à un pourcentage particulier, non nul, d'une température maximale, ce pourcentage prenant une valeur supérieure à 0 et inférieure ou égale à 100.

De préférence, le paramètre spécifique de température correspond à l'une des valeurs de température suivantes :
- une température maximale ;
- 99% de la température maximale ;
- un pourcentage compris entre 1% et 100% de la température maximale ;
- une température moyenne ;
- une température minimale ;
- 99% de la température minimale ;
- un pourcentage compris entre 1% et 100% de la température minimale.

Grâce au second mode de réalisation précité, on prend en compte une pluralité de paramètres spécifiques de température différents permettant d'obtenir une pluralité de spectres de réponse extrême en température, mettant en évidence différents types de température, telle que la température maximale à laquelle le matériel sera soumis, mais également d'autres températures (telles que la température minimale par exemple), qui peuvent être pertinentes pour certaines applications ou dans certaines situations.

Par ailleurs, avantageusement, le procédé comporte une étape préliminaire consistant à déterminer, pour une pluralité de matériels différents, le temps caractéristique associé.

Avantageusement, à cette étape préliminaire, le temps caractéristique associé à un matériel, est obtenu à partir d'une courbe dite représentative illustrant la température mesurée à l'intérieur du matériel en fonction du temps, débutant au moment où ledit matériel (qui initialement présente une température interne Ti initiale) est soumis à une température externe Tf donnée, et le temps caractéristique correspond à l'un des temps suivants :
- le temps pour que la température mesurée à l'intérieur du matériel atteigne 63% de la différence de températures Tf-Ti entre la température externe Tf et la température interne Ti initiale ;
- un tiers du temps pour que la température mesurée à l'intérieur du matériel atteigne 95% de la différence de températures Tf-Ti ;
- un cinquième du temps pour que la température mesurée à l'intérieur du matériel atteigne 99% de la différence de températures Tf-Ti.

Dans un mode de réalisation préféré, la ou les courbes de températures, reçues à l'étape de réception, sont issues d'une ou de plusieurs bases de données publiques, généralement gratuites, ce qui permet de mettre en œuvre le procédé à coût réduit. De plus, de nombreuses courbes de température pour des localisations différentes sont actuellement accessibles.

La présente invention concerne également un dispositif de détermination et d'utilisation d'un outil de diagnostic comprenant au moins un spectre de réponse extrême en température pour une pluralité de types (différents) de matériel.

Selon l'invention, ledit dispositif comporte au moins les unités définies dans la revendication 11.

La présente invention concerne, en outre, une méthode d'aide à l'adaptation d'un matériel à des contraintes thermiques futures.

Selon l'invention, cette méthode comprend au moins les opérations suivantes :
- la réalisation d'un diagnostic relatif au matériel à une ou plusieurs localisations géographiques auxquelles on prévoit qu'il soit employé, en mettant en œuvre le procédé précité et en utilisant un temps caractéristique associé au type dudit matériel ; et
- une conception du matériel qui est adaptée au résultat de ce diagnostic.

Dans le cadre de la présente invention, on prend donc en compte, comme fonction de transfert thermique reliant les conditions thermiques extérieures d'un équipement considéré (dont on ne connaît pas exactement le comportement thermique) aux conditions thermiques internes de cet équipement, une fonction de transfert simplifié correspondant à un filtre du premier ordre qui présente comme constante de temps, un temps caractéristique Tau associé à (et représentatif de) cet équipement (et de ces conditions de stockage et/ou d'utilisation).

La présente invention présente de nombreux avantages. En particulier :
- les spectres de réponse extrême en température apportent une solution avantageuse dans le domaine de la spécification des environnements thermiques, et plus particulièrement pour des environnements extrêmes en température ;
- ils permettent pour un matériel actuellement utilisé, de déterminer, le niveau de sollicitation de ce matériel ;
- ils permettent, surtout, de concevoir un matériel futur, au plus juste, pour pouvoir supporter les contraintes thermiques auxquelles il risque d'être soumis ;
- ils permettent de réaliser une conception au plus tôt, adaptée aux conditions thermiques réelles ;
- le procédé est applicable à une large gamme de matériels (équipement, missile, conteneur, ...) dont on ne connaît pas précisément le comportement thermique ;
- le procédé peut être mis en œuvre à coût réduit grâce à un accès généralement gratuit aux courbes de températures.

### Brève description des figures

D'autres caractéristiques et avantages du dispositif, du procédé et/ou de la méthode selon l'invention apparaîtront mieux à la lecture de la description qui suit d'exemples de réalisation donnés à titre illustratif et nullement limitatifs, annexés des figures suivantes.
La figure 1 est le schéma synoptique d'un dispositif conforme à un mode de réalisation particulier de l'invention.
La figure 2 est une vue schématique d'un exemple de système, en l'occurrence un missile, pourvu de matériels auxquels peut être appliquée la présente invention.
La figure 3 est un graphique permettant d'expliquer les caractéristiques et le mode de détermination d'un temps caractéristique associé à un matériel donné.
La figure 4 illustre schématiquement un mode de réalisation particulier d'un procédé conforme à l'invention.
La figure 5 est un graphique montrant des courbes de températures associées à deux premières villes.
La figure 6 est un graphique issu du traitement des courbes de températures de la figure 5, montrant des courbes illustrant, chacune, l'évolution du spectre de réponse extrême en température en fonction du temps caractéristique, et ceci pour plusieurs paramètres spécifiques de températures et pour chacune de ces deux premières villes.
La figure 7 est un graphique montrant des courbes de températures associées à deux secondes villes.
La figure 8 est un graphique issu du traitement des courbes de températures de la figure 7, montrant des courbes illustrant, chacune, l'évolution du spectre de réponse extrême en température en fonction du temps caractéristique, et ceci pour plusieurs paramètres spécifiques de température et pour chacune de ces deux secondes villes.

### Description détaillée

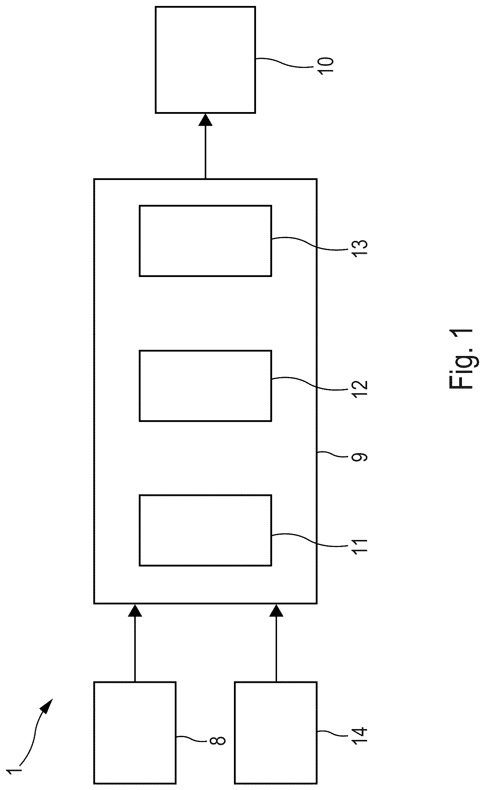

Le dispositif 1 illustrant un mode de réalisation particulier de l'invention et représenté schématiquement sur la figure 1 est un dispositif de détermination et d'utilisation d'un outil de diagnostic comprenant au moins un Spectre de Réponse Extrême en Température (SRET).

Le dispositif 1 s'applique plus particulièrement au domaine militaire, et notamment à tout matériel militaire susceptible d'être soumis à des conditions extrêmes en température, tel qu'un missile par exemple. Il peut s'agir de tout type de matériel, tel que par exemple des matériels électroniques, pyrotechniques, organiques, des protections thermiques, ...

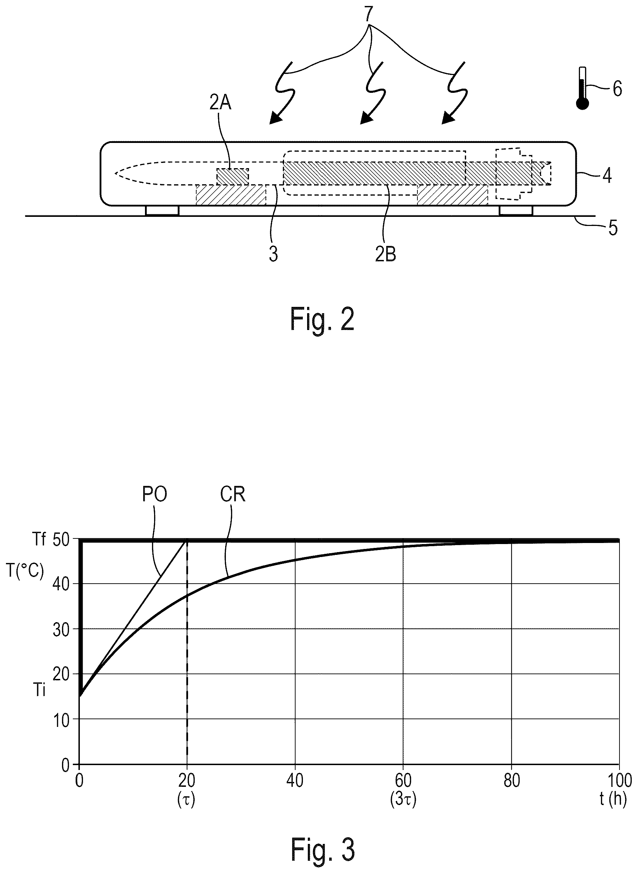

A titre d'exemple, les matériels 2A et 2B représentés sur la figure 2 correspondent à deux équipements d'un missile 3, par exemple un équipement électronique du missile 3 pour le matériel 2A et un propulseur du missile 3 pour le matériel 2B. Le missile 3 est monté dans un conteneur 4 qui est installé au sol 5 à un endroit où il est soumis à des conditions thermiques précisées ci-dessous et illustrées par un thermomètre 6 et des flèches 7.

Dans le cadre de la présente invention, on associe à un type donné de matériel un paramètre dit « temps caractéristique » Tau. Ce temps caractéristique Tau est représentatif du temps nécessaire pour que la température interne au niveau du matériel considéré s'adapte à la température externe à l'endroit où est situé ce matériel (ou bien le système comprenant ce matériel). Ce temps caractéristique Tau varie, notamment, en fonction de la taille du matériel considéré (équipement de missile, missile, ...) , de sa configuration et ses conditions de stockage (en conteneur ou hors conteneur, ...). Ce temps caractéristique représente la constante de temps d'une fonction de transfert thermique (simplifiée) utilisée, reliant les conditions extérieures aux conditions internes du matériel, comme précisé ci-dessous.

A titre d'illustration :
- le temps nécessaire pour complètement stabiliser thermiquement un équipement électronique cubique de 20 cm de côtés, seul, est de quelques heures . Dans ce cas, on considère, par exemple, que le temps caractéristique Tau est de l'ordre de 1 heure ; et
- le temps nécessaire pour complètement stabiliser thermiquement un bloc de poudre d'un missile à longue portée, lorsque le missile est en condition logistique, peut atteindre plusieurs dizaines d'heures, voire quelques jours. Dans ce cas, on considère, par exemple, que le temps caractéristique Tau est de l'ordre de 20 heures.

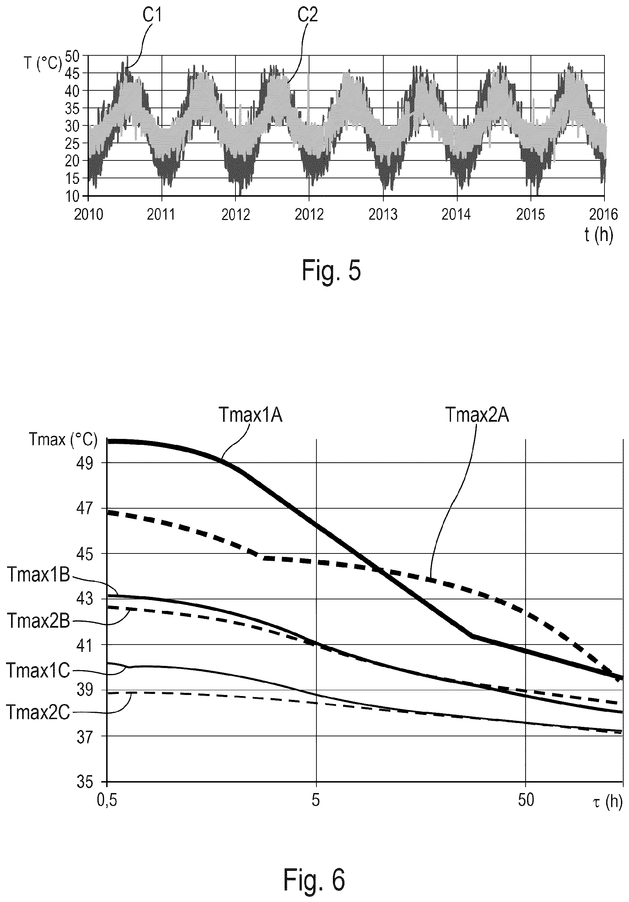

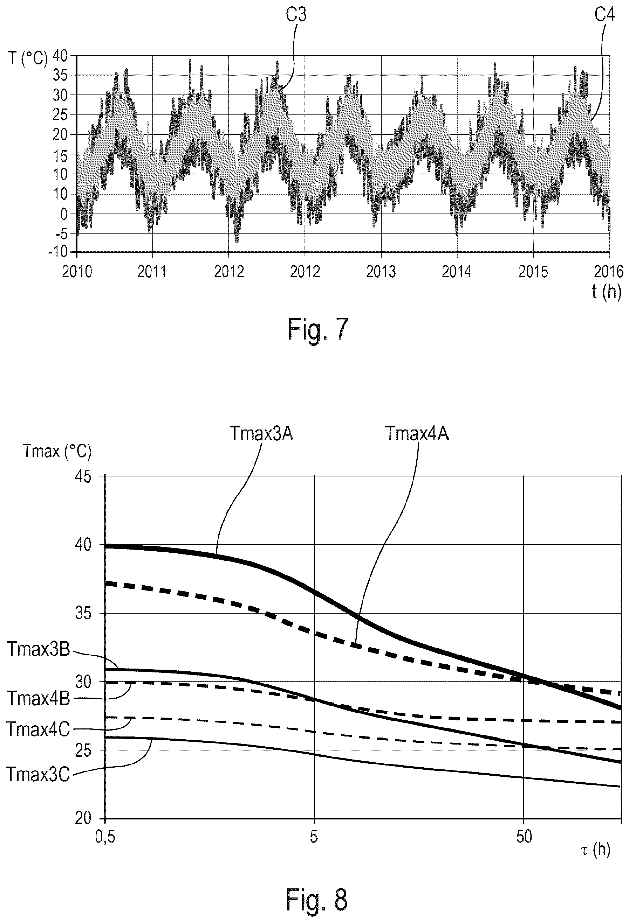

Ledit dispositif 1 comporte, comme représenté sur la figure 1 :
- une unité de réception 8 configurée pour recevoir au moins une courbe de températures C1, C2, C3, C4 (figures 5 et 7). La courbe de températures représente une variation de la température T (exprimée en °C) en fonction du temps t (exprimé par exemple en heures) à une localisation géographique donnée, par exemple au niveau d'une ville comme précisé ci-dessous ;
- une unité de traitement 9 recevant la ou les courbes de températures C1, C2, C3, C4 de l'unité de réception 8. L'unité de traitement 9 est configurée pour réaliser des traitements à l'aide de cette ou de ces courbes de température C1, C2, C3 et C4. L'unité de traitement 9 réalise les traitements de façon itérative, pour chacune d'une pluralité de N valeurs d'un temps caractéristique Tau_i, afin de déterminer au moins un spectre de réponse extrême en température (SRET). N est un entier supérieur à 1 et i est un entier variant de 1 à N. Chaque temps caractéristique Tau_i est associé à un type donné de matériel et est représentatif de ce dernier comme précisé ci-dessous ; et
- une unité de comparaison 10 configurée pour réaliser, à partir au moins du spectre de réponse extrême en température (SRET) (reçu de l'unité de traitement 9), des comparaisons pour effectuer au moins un diagnostic, comme également précisé ci-dessous.

De plus, l'unité de traitement 9 comprend :
- une sous-unité 11 configurée pour, à chaque itération i, filtrer la courbe de températures, à l'aide d'un filtre du premier ordre ayant comme constante de temps ledit temps caractéristique Tau_i, de manière à obtenir une courbe dite modifiée ;
- une sous-unité 12 configurée pour, à chaque itération i, extraire de la courbe modifiée ainsi déterminée, une valeur de température correspondant à un paramètre spécifique de température (par exemple une température maximale, une température minimale,...) ; et
- une sous-unité 13 configurée pour, à chaque itération i, associer cette valeur de température extraite au temps caractéristique Tau_i correspondant à l'itération i, pour former un couple de valeurs.

Les couples de valeurs obtenues à la fin des N itérations forment un ensemble de couples. Le spectre de réponse extrême en température (SRET) comprend au moins cet ensemble de couples de valeurs.

Ledit dispositif 1 comporte également une unité de réception 14 configurée pour recevoir les temps caractéristiques minimum et maximum associés à la pluralité de matériels différents considérés. Les temps caractéristiques minimum et maximum sont une entrée saisie par l'utilisateur en fonction de sa connaissance des matériels. Les temps caractéristiques minimum et maximum sont transmis à l'unité de traitement 9 et utilisés par les sous-unités 11, 12, 13, lors des traitements mis en œuvre. Ils peuvent également être utilisés par l'unité de comparaison 10.

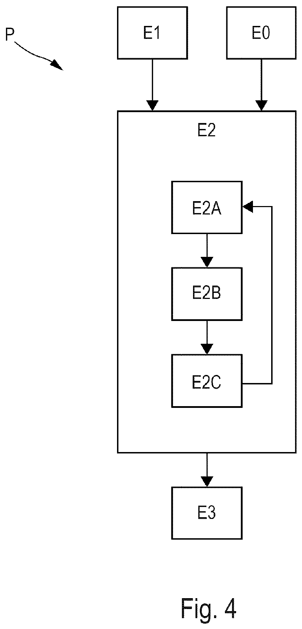

Le dispositif 1, tel que décrit ci-dessus, est destiné à mettre en œuvre un procédé P de détermination et d'utilisation d'un outil de diagnostic comprenant au moins un spectre de réponse extrême en température (SRET). On décrit à présent ce procédé P mis en œuvre par le dispositif 1, qui est représenté sur la figure 4.

Ledit procédé P comporte au moins les étapes suivantes :
- une étape E1 de réception d'au moins une courbe de températures C1, C2, C3, C4 (figures 5 et 7) qui présente une variation de la température T en fonction du temps t à une localisation géographique donnée ;
- une étape E2 de traitement comprenant une suite de sous-étapes E2A, E2B et E2C successives. Cette suite est mise en œuvre de façon itérative pour chacune d'une pluralité de N valeurs du temps caractéristique Tau_i. N est un entier supérieur à 1 et i est un entier variant de 1 à N. Un temps caractéristique Tau_i est associé à un type donné de matériel donné, par exemple au matériel 2A ou au matériel 2B de la figure 2, et est représentatif de ce matériel. L'étape E2 de traitement comprend, pour une itération i donnée :
   - la sous-étape E2A consistant à filtrer ladite courbe de températures C1, C2, C3, C4 à l'aide d'un filtre du premier ordre ayant comme constante de temps ledit temps caractéristique Tau_i, de manière à obtenir une courbe dite modifiée ;
   - la sous-étape E2B consistant à extraire de la courbe modifiée ainsi déterminée, une valeur de température correspondant à un paramètre spécifique de température ; et
   - la sous-étape E2C consistant à associer cette valeur de température extraite au temps caractéristique Tau_i correspondant à l'itération i, pour former un couple de valeurs. Les couples de valeurs obtenues à la fin des N itérations forment un ensemble de couples. Ledit ensemble de couples de valeurs est représenté, de préférence, sous forme d'une courbe. Le spectre de réponse extrême en température (SRET) comprend au moins cet ensemble de couples de valeurs ; et
- une étape E3 de comparaison consistant à réaliser, à partir au moins dudit spectre extrême de réponse en température (SRET), des comparaisons pour effectuer au moins un diagnostic.

On décrit ci-après, plus en détail, les étapes principales du procédé P.

Les courbes de températures C1, C2, C3 et C4 que l'on souhaite utiliser sont extraites de bases de données et reçues par l'unité de réception 8 à l'étape E1 de réception. Ces courbes de températures sont généralement échantillonnés à l'heure, c'est-à-dire avec une mesure de température à chaque heure, et ceci pour des durées de plusieurs années parfois.

Dans un mode de réalisation préféré, la ou les courbes de températures, reçues à l'étape E1 de réception, sont issues d'une ou de plusieurs bases de données publiques usuelles, notamment des bases de données disponibles sur des sites gouvernementaux. L'accès aux informations de telles bases de données est généralement gratuit. Ceci permet de mettre en œuvre le procédé P à coût réduit. De plus, de nombreuses courbes de températures pour des localisations différentes, soumises à des conditions thermiques variées et parfois extrêmes, sont actuellement accessibles. Ceci apporte une grande variété de possibilités de diagnostic.

Après réception de la ou les courbes de températures C1, C2, C3, C4, que l'on souhaite utiliser, la sous-unité 11 réalise, à la sous-étape E2A, pour chaque courbe de températures C1, C2, C3, C4, un filtrage usuel, à l'aide d'un filtre du premier ordre ayant comme constante de temps le temps caractéristique Tau considéré.

Dans le cadre de la présente invention, la fonction de transfert thermique (FT) reliant les conditions extérieures aux conditions internes de l'équipement considéré est donc ramené à un filtre du premier ordre (avec comme de constante de temps, le temps caractéristique Tau). Cette fonction de transfert thermique (FT) simplifiée est décrite par :
- une inertie thermique Cth qui va ralentir la propagation des conditions extérieures, qui est décrite par :
   - m : la masse (en kg) ; et
   - Cp : la chaleur massique (en J/kg/K) ; et
- une conductance thermique 1/*Rth* qui va favoriser la propagation des conditions extérieures. La conductance thermique est décrite :
   o par *hS* pour les phénomènes de convection, avec :
      - h : le coefficient d'échange convectif (W/m²/K) ; et
      - S : la surface d'échange par convection (m²) ;
   o ou par *λS*/*e* pour les phénomène de conduction, avec :
      - e : l'épaisseur traversée par le flux (en m) ;
      - *λ* : la conductivité thermique (en W/m/K) ; et
      - S : la surface d'échange par conduction (en m²).

La température interne de l'équipement est la solution de l'équation différentielle (1) du premier ordre, qui peut s'écrire de la manière suivante : $Tau \frac{dT \left(t\right)}{dt} + T \left(t\right) = Text$

Avec :
- Text : la température extérieure ;
- T(t) : la température interne fonction du temps t ; et
- Tau : une constante caractéristique du comportement thermique de l'équipement.

Lorsque l'équipement est soumis à un échelon de température entre 0 et Text, l'équation (1) a pour solution : $T \left(t\right) = Text \left(1-{e}^{- \frac{t}{Tau}}\right)$

Lorsque l'équipement est soumis à un échelon de température entre Ti et Tf (figure 3), l'équation (1) s'écrit sous forme d'une équation : $Tau \frac{dT \left(t\right)}{dt} + T \left(t\right) = Tf$

La solution de cette équation est : $T \left(t\right) = Ti + \left(Tf-Ti\right) \left(1-{e}^{- \frac{t}{Tau}}\right)$

La courbe CR de la figure 3 illustre la réponse d'un filtre du premier ordre de constante de temps Tau=20, lorsqu'il est soumis à un échelon de température entre 15°C (Ti) et 50°C (Tf).

En observant le comportement (illustré par cette courbe CR), on peut identifier le temps caractéristique Tau à l'aide de l'une des propriétés suivantes :
- après une durée de Tau, l'échauffement est de 63% de la différence de températures Tf-Ti considérée ;
- après une durée de 3 Tau, l'échauffement est de 95% de la différence de températures Tf-Ti considérée ;
- après une durée de 5 Tau, l'échauffement est de 99% de la différence de températures Tf-Ti considérée.

Le filtrage réalisé à la sous-étape E2A permet d'obtenir une courbe modifiée, qui est ensuite utilisée à la sous-étape E2B pour en extraire la valeur de température correspondant à un paramètre spécifique de température.

Le paramètre spécifique de température utilisé à la sous-étape E2B de l'étape E2 de traitement correspond à un pourcentage particulier, non nul, de la température maximale, ce pourcentage prenant une valeur supérieure à 0 et inférieure ou égale à 100.

De préférence, le paramètre spécifique de température correspond à l'une des valeurs de température suivantes :
- une température maximale ;
- 99% de la température maximale ;
- un pourcentage compris entre 1% et 100% de la température maximale ;
- une température moyenne ;
- une température minimale ;
- 99% de la température minimale ;
- un pourcentage compris entre 1% et 100% de la température minimale.

Plus précisément, à la sous-étape E2B de l'étape E2 de traitement, la sous-unité 12 réalise les opérations suivantes pour extraire la valeur de température recherchée :
- elle trie selon un ordre croissant toutes les températures de la courbe modifiée obtenue à la sous-étape E2A ; et
- elle identifie, dans ledit tri ainsi réalisé, la valeur de température qui correspondant au paramètre spécifique de température, par exemple à 99% de la température maximale.

La valeur de température ainsi identifiée est associée, à la sous-étape E2C, par la sous-unité 13, au temps caractéristique correspondant à l'itération, de manière à former un couple de valeurs pour cette itération. L'ensemble des couples de valeurs obtenues à la sous-étape E2C, à la fin des itérations, forment le spectre de réponse extrême en température (SRET). Ledit ensemble de couples de valeurs est représenté, de préférence, sous forme d'une courbe.

Les figures 6 et 8 montrent différentes courbes ainsi obtenues, qui seront précisées ci-dessous.

Puis, à l'étape E3 de comparaison sont réalisées des comparaisons, à partir du ou des spectres de réponse extrême en température (SRET) déterminés à l'étape E2 de traitement, pour effectuer au moins un diagnostic concernant le ou les matériels considérés.

Par ailleurs, dans un mode de réalisation particulier, le procédé P comporte une étape préliminaire E0. Cette étape préliminaire E0, consiste à réceptionner, pour une pluralité de matériels différents, les temps caractéristiques minimum et maximum.

Le comportement de chaque équipement est simplifié par un système à un seul paramètre, à savoir le temps (temps caractéristique) qui est nécessaire pour que sa température se stabilise (inertie thermique).

A l'étape préliminaire E0, le temps caractéristique associé à un matériel donné, tel que l'équipement électronique 2A ou le propulseur 2B du missile 3 de la figure 2, est obtenu à partir d'une courbe dite représentative CR telle que représentée sur la figure 3. Cette courbe représentative CR indique la température T (exprimée en °C) mesurée à l'intérieur du matériel considéré 2A, 2B en fonction du temps t (exprimé en heures). Elle est représentative du matériel considérée. La mesure utilisée débute au moment où le matériel, qui présente initialement une température interne Ti (initiale) de 15°C, est soumis à une température externe Tf donnée de 50°C. Pour des raisons de simplification du dessin, on a représenté sur la figure 3 une courbe représentative CR présentant une évolution théorique, une courbe obtenue par des mesures réelles présentant généralement un tracé moins lisse et moins cohérent.

Le temps caractéristique Tau associé à la courbe représentative CR est obtenu à partir de cette courbe représentative CR, en identifiant l'un des temps suivants :
- le temps pour que la température mesurée à l'intérieur du matériel atteigne 63% de la différence de températures Tf-Ti. Sur l'exemple de la figure 3, le temps pour atteindre 63 % est de 20 h ;
- un tiers du temps pour que la température mesurée à l'intérieur du matériel atteigne 95% de la différence de températures Tf-Ti. Sur l'exemple de la figure 3, le temps pour atteindre 95 % est de 60 h ;
- un cinquième du temps pour que la température mesurée à l'intérieur du matériel atteigne 99% de la différence de températures Tf-Ti.

Par conséquent, pour un matériel donné, par exemple le matériel 2B de la figure 2, qui présente une courbe représentative CR telle que celle de la figure 3, on déduit à l'étape préliminaire E0 que le temps caractéristique Tau associé à ce matériel correspond à 20 heures.

Ainsi, grâce au procédé P, on obtient un spectre de réponse extrême en température (SRET) qui est représentatif d'une courbe de températures d'une localisation géographique donnée, par exemple une ville, et qui fournit des valeurs de température, notamment extrêmes, en fonction des temps caractéristiques qui sont représentatifs d'une pluralité de types de matériels considérés. Par conséquent, pour un type particulier de matériel, par exemple un équipement d'un missile, on est en mesure de connaître la température (température maximale, température minimale, ...) :
- à laquelle il a été soumis s'il était positionné à la localisation géographique considérée ; ou
- à laquelle il sera soumis s'il sera positionné à la localisation géographique considérée.

On dispose ainsi, en réalisant des comparaisons, par exemple avec le spectre de réponse extrême en température (SRET) d'une autre localisation géographique ou pour des matériels de types différents, d'un outil de diagnostic qui permet de déterminer les conditions thermiques, notamment les températures extrêmes, auxquelles un matériel va être soumis, en particulier pour réaliser une personnalisation lors de la conception du matériel (afin de l'adapter aux contraintes thermiques rencontrées pour qu'il puisse supporter ces températures sans être surdimensionné) ou pour évaluer son niveau de sollicitation. Cet outil de diagnostic est applicable aux principaux types de matériel (électroniques, pyrotechniques, organiques, protections thermiques...), tels qu'utilisés notamment dans le domaine militaire.

Différents types de diagnostic sont possibles grâce à l'invention. On précise ci-après, à titre d'illustration, deux modes de réalisation différents du procédé P.

Dans un premier mode de réalisation du procédé P, l'étape E1 de réception et l'étape E2 de traitement sont mises en œuvre pour chacune d'une pluralité de courbes de températures C1, C2, C3, C4 différentes permettant d'obtenir une pluralité de spectres de réponse extrême en température (SRET), et l'étape E3 de comparaison consiste à réaliser des comparaisons à partir au moins de deux de ces spectres de réponse extrême en température (SRET).

A titre d'illustration, on présente, ci-après, deux exemples de mise en œuvre de ce premier mode de réalisation.

Pour le premier exemple, on se réfère aux courbes (ou temporels) de température C1 et C2 de deux villes nommées V1 et V2, telles que représentées sur la figure 5. Ces courbes de température C1 et C2 sont échantillonnées à l'heure entre 2010 et 2016, c'est-à-dire qu'elles comprennent les valeurs des températures externes mesurées respectivement dans les villes V1 et V2, chaque heure, et ceci de 2010 à 2016. La température maximale est de 50°C pour la ville V1 et de 47°C pour la ville V2. L'amplitude diurne moyenne est plus élevée pour la ville V1 (8,2°C) que pour la ville V2 (5,3°C).

La figure 6 représente les spectres de réponse extrême en température (SRET) pour les villes V1 et V2, obtenus à partir des courbes de température C1 et C2. Les spectres de réponse extrême en température (SRET) sont représentés en trait continu pour la ville V1 et en tirets pour la ville V2.

Pour chaque ville, trois courbes de température (en fonction du temps caractéristique Tau) sont représentées, respectivement, pour des valeurs différentes de paramètre spécifique de température.

Plus précisément, on a représenté sur la figure 6 :
- pour la ville V1 :
   - une courbe Tmax1A déterminée pour un paramètre spécifique de température correspondant à la température maximale ;
   - une courbe Tmax1B déterminée pour un paramètre spécifique de température correspondant à 99% de la température maximale ; et
   - une courbe Tmax1C déterminée pour un paramètre spécifique de température correspondant à 95% de la température maximale ;
- pour la ville V2 :
   - une courbe Tmax2A déterminée pour un paramètre spécifique de température correspondant à la température maximale ;
   - une courbe Tmax2B déterminée pour un paramètre spécifique de température correspondant à 99% de la température maximale ; et
   - une courbe Tmax2C déterminée pour un paramètre spécifique de température correspondant à 95% de la température maximale.

En réalisant une comparaison de certains de ces spectres de réponse extrême en température (SRET) à l'étape E3 de comparaison, on constate, à partir des courbes Tmax1A et Tmax2A, que pour un petit équipement ou matériel (Tau<10h), la ville V1 est plus sévère. En revanche, pour un plus grand équipement ou matériel (Tau >10h), par exemple un propulseur à longue portée, la ville V2 est plus sévère.

De plus, on constate également, à partir des courbes Tmax1B et Tmax2B (99 % de la température maximale), que les deux villes V1 et V2 sont équivalentes quelle que soit la valeur du temps caractéristique Tau (c'est-à-dire quel que soit le matériel).

Pour le deuxième exemple, on se réfère aux courbes (ou temporels) de température C3 et C4 de deux villes nommées V3 et V4, telles que représentées sur la figure 7. Ces courbes de température C3 et C4 sont échantillonnées à l'heure, entre 2010 et 2016, c'est-à-dire qu'elles comprennent les valeurs des températures externes mesurées respectivement dans les villes V3 et V4, chaque heure, et ceci de 2010 à 2016. La température maximale est de 40°C pour la ville V3 et de 37,7°C pour la ville V4.

La figure 8 représente les spectres de réponse extrême en température (SRET) pour les villes V3 et V4, obtenus à partir des courbes de température C3 et C4. Les températures sont représentées en trait continu pour la ville V3 et en tirets pour la ville V4.

Pour chaque ville, trois courbes de température (en fonction du temps caractéristique Tau) sont représentées, respectivement, pour des valeurs différentes de paramètre spécifique de température.

Plus précisément, on a représenté sur la figure 8 :
- pour la ville V3 :
   - une courbe Tmax3A déterminée pour un paramètre spécifique de température correspondant à la température maximale ;
   - une courbe Tmax3B déterminée pour un paramètre spécifique de température correspondant à 99% de la température maximale ; et
   - une courbe Tmax3C déterminée pour un paramètre spécifique de température correspondant à 95% de la température maximale ;
- pour la ville V4 :
   - une courbe Tmax4A déterminée pour un paramètre spécifique de température correspondant à la température maximale ;
   - une courbe Tmax4B déterminée pour un paramètre spécifique de température correspondant à 99% de la température maximale ; et
   - une courbe Tmax4c déterminée pour un paramètre spécifique de température correspondant à 95% de la température maximale.

En réalisant une comparaison de certains de ces spectres de réponse extrême en température (SRET) à l'étape E3 de comparaison, on constate, à partir des courbes Tmax3A et Tmax4A que, pour tout type d'équipement ou matériel (Tau<50h), la ville V3 est plus sévère que la ville V4 (avec une différence de températures de 3°C sur les valeurs maximales).

De plus, on constate également, à partir des courbes Tmax3B et Tmax4B (99 % de la température maximale) que, pour de petits équipements ou matériels (Tau<5h), les deux villes V3 et V4 sont relativement équivalentes. En revanche, pour de gros équipements ou matériels (Tau>10h), la ville V4 est plus sévère que la ville V3.

Grâce à ce premier mode de réalisation (décrit ci-dessus), on est en mesure de comparer les effets sur un matériel donné ou sur plusieurs matériels donnés des températures, pour plusieurs courbes de températures différentes, c'est-à-dire pour plusieurs localisations géographiques différentes (telles que les villes V1, V2, V3 et V4).

Ceci permet notamment d'adapter le matériel aux conditions thermiques auxquelles il sera soumis dans une localisation géographique donnée, par exemple une ville ayant des températures très élevées.

Dans un second mode de réalisation du procédé P, en variante ou en complément du premier mode de réalisation décrit précédemment :
- l'étape E2 de traitement est mise en œuvre pour une pluralité de paramètres spécifiques de température différents permettant d'obtenir une pluralité de spectres de réponse extrême en température (SRET), dont chacun est associé à un paramètre spécifique de température, comme par exemple les 3 courbes Tmax1A, Tmax1B et Tmax1C de la figure 6 pour la ville V1 qui correspondent, respectivement, aux paramètres spécifiques de température suivants :
   - la température maximale ;
   - 99% de la température maximale ;
   - 95% de la température maximale ; et
- l'étape E3 de comparaison consiste à réaliser des comparaisons à partir au moins de deux de ces spectres de réponse extrême en température (SRET).

Grâce à ce second mode de réalisation, on prend ainsi en compte une pluralité de paramètres spécifiques de température différents, ce qui permet d'obtenir une pluralité de spectres de réponse extrême en température (SRET), mettant en évidence différents types de température, telle que la température maximale à laquelle le matériel sera soumis, mais également d'autres températures telles que la température minimale, ou des pourcentages de la température maximale ou minimale, qui peuvent être pertinentes pour certaines applications ou dans certaines situations.

Le premier exemple précité des figures 5 et 6 et le second exemple précité des figures 7 et 8 (qui, en plus de localisations géographiques différentes, génèrent des spectres de réponse extrême en température (SRET) pour des paramètres spécifiques de température différents) sont également obtenus, en partie, à partir dudit second mode de réalisation du procédé P.

Le dispositif 1 et le procédé P utilisent donc un modèle "étalon" permettant de comparer l'effet des courbes (ou temporels) de températures sur un matériel dont on ne connaît pas précisément la fonction de transfert thermique, à savoir le temps nécessaire pour que la température se propage de l'extérieur au cœur du matériel considéré.

Le dispositif 1 et le procédé P, tels que décrits ci-dessus, présentent ainsi de très nombreux avantages. En particulier :
- les spectres de réponse extrême en température, obtenus, apportent une solution avantageuse dans le domaine de la spécification des environnements thermiques, et plus particulièrement pour des environnements extrêmes en température ;
- ils permettent pour un matériel actuellement utilisé, de déterminer, le niveau de sollicitation de ce matériel ;
- ils permettent, surtout, de concevoir un matériel futur, au plus juste, pour pouvoir supporter les contraintes thermiques auxquelles il risque d'être soumis, c'est-à-dire réaliser une personnalisation. Une telle personnalisation (aux environnements climatiques notamment concernant les contraintes extrêmes) permet de dimensionner au mieux le matériel aux contraintes thermiques, et ceci quel que soit le type de matériel ;
- ils permettent de réaliser une conception au plus tôt, adaptée aux conditions thermiques réelles ;
- le procédé est applicable à une large gamme de matériels (équipement, missile, conteneur, ...) dont on ne connaît pas précisément le comportement thermique ; et
- le procédé peut être mis en œuvre à coût réduit grâce à un accès généralement gratuit aux courbes de températures.

## Revendications

1. Procédé de détermination et d'utilisation d'un outil de diagnostic comprenant au moins un spectre de réponse extrême en température (SRET) pour une pluralité de types de matériel, l'outil de diagnostic étant apte à déterminer l'effet de conditions thermiques,
**caractérisé en ce qu'**il comporte au moins les étapes suivantes :
- une étape (E1) de réception d'au moins une courbe de températures (C1, C2, C3, C4), la courbe de températures (C1, C2, C3, C4) représentant une variation de la température en fonction du temps à une localisation géographique donnée ;
- une étape (E2) de traitement comprenant une suite de sous-étapes (E2A, E2B, E2C) successives, ladite suite étant mise en œuvre de façon itérative pour chacune d'une pluralité de N valeurs différentes d'un temps caractéristique Tau_i, N étant un entier supérieur à 1 et i étant un entier variant de 1 à N, le temps caractéristique Tau_i étant associé à un type donné de matériel (2A, 2B) et représentatif de ce dernier, ladite suite de sous-étapes successives comprenant, pour une itération donnée :
• une première sous-étape (E2A) consistant à filtrer ladite courbe de températures (C1, C2, C3, C4), à l'aide d'un filtre du premier ordre ayant comme constante de temps ledit temps caractéristique Tau_i, de manière à obtenir une courbe dite modifiée ;
• une deuxième sous-étape (E2B) consistant à extraire de la courbe modifiée ainsi obtenue, une valeur de température correspondant à un paramètre spécifique de température ; et
• une troisième sous-étape (E2C) consistant à associer cette valeur de température extraite au temps caractéristique Tau_i correspondant à l'itération, pour former un couple de valeurs,
les couples de valeurs obtenus à la fin des N itérations formant un ensemble de couples, ledit spectre de réponse extrême en température (SRET) comprenant au moins ledit ensemble de couples de valeurs ; l'étape (E1) de réception et l'étape (E2) de traitement étant mises en œuvre de manière à obtenir une pluralité de spectres de réponse extrême en température (SRET) ; et
- une étape (E3) de comparaison consistant à réaliser, à partir au moins de deux de ces spectres de réponse extrême en température (SRET), des comparaisons pour effectuer au moins un diagnostic.

2. Procédé selon la revendication 1, **caractérisé en ce que** l'étape (E1) de réception et l'étape (E2) de traitement sont mises en œuvre pour chacune d'une pluralité de courbes de températures (C1, C2, C3, C4) différentes permettant d'obtenir une pluralité de spectres de réponse extrême en température (SRET) et **en ce que** l'étape (E3) de comparaison consiste à réaliser des comparaisons à partir au moins de deux de ces spectres de réponse extrême en température (SRET).

3. Procédé selon l'une des revendications 1 et 2,
**caractérisé en ce que** l'étape (E2) de traitement est mise en œuvre pour une pluralité de paramètres spécifiques de température différents permettant d'obtenir une pluralité de spectres de réponse extrême en température (SRET), dont chacun est associé à un paramètre spécifique de température, et **en ce que** l'étape (E3) de comparaison consiste à réaliser des comparaisons à partir au moins de deux de ces spectres de réponse extrême en température (SRET).

4. Procédé selon l'une quelconque des revendications précédentes,
**caractérisé en ce que** le paramètre spécifique de température correspond à un pourcentage particulier, non nul, d'une température maximale ou minimale.

5. Procédé selon la revendication 4,
**caractérisé en ce que** le paramètre spécifique de température correspond à l'une des valeurs de température suivantes :
- un pourcentage compris entre 1% et 100% de la température maximale ;
- une température moyenne ;
- un pourcentage compris entre 1% et 100% de la température minimale.

6. Procédé selon l'une quelconque des revendications précédentes,
**caractérisé en ce que** la deuxième sous-étape (E2B) de l'étape (E2) de traitement réalise les opérations suivantes :
- trier les températures de ladite courbe modifiée selon un ordre croissant ; et
- identifier, dans ledit tri, la valeur de température correspondant au paramètre spécifique de température.

7. Procédé selon l'une quelconque des revendications précédentes,
**caractérisé en ce qu'**il comporte une étape préliminaire (E0) consistant à déterminer, pour une pluralité de matériels différents (2A, 2B), les temps caractéristiques minimum et maximum associés.

8. Procédé selon la revendication 7,
**caractérisé en ce qu'**à l'étape préliminaire (E0), le temps caractéristique associé à un matériel (2A, 2B), est obtenu à partir d'une courbe dite représentative illustrant la température mesurée à l'intérieur du matériel (2A, 2B) en fonction du temps, débutant au moment où ledit matériel (2A, 2B) qui initialement présente une température interne Ti initiale est soumis à une température externe Tf donnée, et **en ce que** le temps caractéristique correspond à l'un des temps suivants :
- le temps pour que la température mesurée à l'intérieur du matériel (2A, 2B) atteigne 63% de la différence de températures Tf-Ti entre la température externe Tf et la température interne Ti initiale ;
- un tiers du temps pour que la température mesurée à l'intérieur du matériel (2A, 2B) atteigne 95% de la différence de températures Tf-Ti ;
- un cinquième du temps pour que la température mesurée à l'intérieur du matériel (2A, 2B) atteigne 99% de la différence de températures Tf-Ti.

9. Procédé selon l'une quelconque des revendications précédentes, **caractérisé en ce que** la ou les courbes de températures (C1, C2, C3, C4), reçues à l'étape (E1) de réception, sont issues d'une base de données publique.

10. Procédé selon l'une quelconque des revendications précédentes, **caractérisé en ce que** ledit ensemble de couples de valeurs est représenté sous forme d'une courbe.

11. Dispositif de détermination et d'utilisation d'un outil de diagnostic comprenant au moins un spectre de réponse extrême en température (SRET) pour une pluralité de types de matériel, l'outil de diagnostic étant apte à déterminer l'effet de conditions thermiques,
**caractérisé en ce qu'**il comporte au moins les unités suivantes :
- une unité de réception (8) configurée pour recevoir au moins une courbe de températures, la courbe de températures (C1, C2, C3, C4) représentant une variation de la température en fonction du temps à une localisation géographique donnée ;
- une unité de traitement (9) réalisant des traitements de façon itérative pour chacune d'une pluralité de N valeurs différentes d'un temps caractéristique Tau_i, N étant un entier supérieur à 1 et i étant un entier variant de 1 à N, le temps caractéristique Tau_i étant associé à un type donné de matériel (2A, 2B) et représentatif de ce dernier, ladite unité de traitement comprenant :
• une première sous-unité (11) configurée pour filtrer ladite courbe de températures (C1, C2, C3, C4), à l'aide d'un filtre du premier ordre ayant comme constante de temps ledit temps caractéristique Tau_i, de manière à obtenir une courbe dite modifiée ;
• une deuxième sous-unité (12) configurée pour extraire de la courbe modifiée ainsi déterminée, une valeur de température correspondant à un paramètre spécifique de température ; et
• une troisième sous-unité (13) configurée pour associer cette valeur de température extraite au temps caractéristique Tau_i correspondant à l'itération, pour former un couple de valeurs,
les couples de valeurs obtenues à la fin des N itérations formant un ensemble de couples de valeurs, ledit spectre de réponse extrême en température (SRET) comprenant au moins ledit ensemble de couples de valeurs
l'unité de réception (8) et l'unité de traitement (9) étant configurées de manière à obtenir une pluralité de spectres extrême en température (SRET) ; et
- une unité de comparaison (10) configurée pour réaliser, à partir au moins de deux de ces spectres de réponse extrême en température (SRET), des comparaisons pour effectuer au moins un diagnostic.

12. Méthode d'aide à l'adaptation d'un matériel à des contraintes thermiques futures,
**caractérisée en ce qu'**elle comprend au moins les opérations suivantes :
- la réalisation d'un diagnostic relatif au matériel (2A, 2B) à une ou plusieurs localisations géographiques auxquelles on prévoit qu'il soit employé, en mettant en œuvre le procédé (P) selon l'une quelconque des revendications 1 à 10 et en utilisant un temps caractéristique associé au type dudit matériel (2A, 2B) ; et
- une conception du matériel qui est adaptée au résultat de ce diagnostic.

## Patentansprüche

1. Verfahren zur Bestimmung und zur Verwendung eines Diagnoseinstruments, das mindestens ein Extremtemperatur-Antwortspektrum (SRET) für eine Vielzahl von Materialtypen umfasst, wobei das Diagnoseinstrument in der Lage ist, die Auswirkung thermischer Bedingungen zu bestimmen,
**dadurch gekennzeichnet, dass** es mindestens die folgenden Schritte umfasst:
- einen Schritt (E1) des Empfangens mindestens einer Temperaturkurve (C1, C2, C3, C4), wobei die Temperaturkurve (C1, C2, C3, C4) eine Schwankung der Temperatur in Abhängigkeit von der Zeit an einem gegebenen geografischen Ort darstellt;
- einen Verarbeitungsschritt (E2), der eine Abfolge aufeinanderfolgender Teilschritte (E2A, E2B, E2C) umfasst, wobei die Abfolge iterativ für jeden einer Vielzahl von N verschiedenen Werten einer charakteristischen Zeit Tau_i durchgeführt wird, wobei N eine ganze Zahl größer als 1 ist und i eine ganze Zahl ist, die von 1 bis N schwankt, wobei die charakteristische Zeit Tau_i einem gegebenen Materialtyp (2A, 2B) zugeordnet und für diesen repräsentativ ist, wobei die Abfolge aufeinanderfolgender Teilschritte für eine gegebene Iteration umfasst:
- einen ersten Teilschritt (E2A), der darin besteht, die Temperaturkurve (C1, C2, C3, C4) mit Hilfe eines Filters erster Ordnung zu filtern, der als Zeitkonstante die charakteristische Zeit Tau_i aufweist, um eine sogenannte modifizierte Kurve zu erhalten;
- einen zweiten Teilschritt (E2B), der darin besteht, aus der so erhaltenen modifizierten Kurve einen Temperaturwert zu extrahieren, der einem temperaturspezifischen Parameter entspricht; und
- einen dritten Teilschritt (E2C), der darin besteht, diesen extrahierten Temperaturwert der der Iteration entsprechenden charakteristischen Zeit Tau_i zuzuordnen, um ein Wertepaar zu bilden,
wobei die am Ende der N Iterationen erhaltenen Wertepaare eine Menge von Paaren bilden, wobei das Extremtemperatur-Antwortspektrum (SRET) mindestens die Menge von Wertepaaren umfasst;
wobei der Empfangsschritt (E1) und der Verarbeitungsschritt (E2) so durchgeführt werden, dass eine Vielzahl von Extremtemperatur-Antwortspektren (SRET) erhalten werden; und
- einen Vergleichsschritt (E3), der darin besteht, auf Grundlage von mindestens zwei dieser Extremtemperatur-Antwortspektren (SRET) Vergleiche durchzuführen, um mindestens eine Diagnose zu erstellen.

2. Verfahren nach Anspruch 1,
**dadurch gekennzeichnet, dass** der Empfangsschritt (E1) und der Verarbeitungsschritt (E2) für jede einer Vielzahl von verschiedenen Temperaturkurven (C1, C2, C3, C4) durchgeführt werden, was es ermöglicht, eine Vielzahl von Extremtemperatur-Antwortspektren (SRET) zu erhalten, und dass der Vergleichsschritt (E3) darin besteht, Vergleiche auf Grundlage von mindestens zwei dieser Extremtemperatur-Antwortspektren (SRET) durchzuführen.

3. Verfahren nach einem der Ansprüche 1 und 2,
**dadurch gekennzeichnet, dass** der Verarbeitungsschritt (E2) für eine Vielzahl von verschiedenen temperaturspezifischen Parametern durchgeführt wird, was es ermöglicht, eine Vielzahl von Extremtemperatur-Antwortspektren (SRET) zu erhalten, von denen jedes einem temperaturspezifischen Parameter zugeordnet ist, und dass der Vergleichsschritt (E3) darin besteht, Vergleiche auf Grundlage von mindestens zwei dieser Extremtemperatur-Antwortspektren (SRET) durchzuführen.

4. Verfahren nach einem der vorstehenden Ansprüche,
**dadurch gekennzeichnet, dass** der temperaturspezifische Parameter einem bestimmten Prozentwert ungleich null einer Maximal- oder Minimaltemperatur entspricht.

5. Verfahren nach Anspruch 4,
**dadurch gekennzeichnet, dass** der temperaturspezifische Parameter einem der folgenden Temperaturwerte entspricht:
- einem Prozentwert im Bereich zwischen 1 % und 100 % der Maximaltemperatur;
- einer Durchschnittstemperatur;
- einem Prozentwert im Bereich zwischen 1 % und 100 % der Minimaltemperatur.

6. Verfahren nach einem der vorstehenden Ansprüche,
**dadurch gekennzeichnet, dass** der zweite Teilschritt (E2B) des Verarbeitungsschritts (E2) die folgenden Vorgänge durchführt:
- Sortieren der Temperaturen der modifizierten Kurve in aufsteigender Reihenfolge; und
- Identifizieren des Temperaturwerts in der Sortierung, der dem temperaturspezifischen Parameter entspricht.

7. Verfahren nach einem der vorstehenden Ansprüche,
**dadurch gekennzeichnet, dass** es einen vorbereitenden Schritt (E0) umfasst, der darin besteht, für eine Vielzahl von verschiedenen Materialien (2A, 2B) die zugeordneten minimalen und maximalen charakteristischen Zeiten zu bestimmen.

8. Verfahren nach Anspruch 7,
**dadurch gekennzeichnet, dass** in dem vorbereitenden Schritt (E0) die einem Material (2A, 2B) zugeordnete charakteristische Zeit auf Grundlage einer sogenannten repräsentativen Kurve erhalten wird, die die im Inneren des Materials (2A, 2B) gemessene Temperatur in Abhängigkeit von der Zeit darstellt, beginnend ab dem Zeitpunkt, zu dem das Material (2A, 2B), das anfangs eine anfängliche Innentemperatur Ti aufweist, einer gegebenen Außentemperatur Tf ausgesetzt wird, und dass die charakteristische Zeit einer der folgenden Zeiten entspricht:
- der Zeit, bis die im Inneren des Materials (2A, 2B) gemessene Temperatur 63 % der Temperaturdifferenz Tf-Ti zwischen der Außentemperatur Tf und der anfänglichen Innentemperatur Ti erreicht;
- einem Drittel der Zeit, bis die im Inneren des Materials (2A, 2B) gemessene Temperatur 95 % der Temperaturdifferenz Tf-Ti erreicht;
- einem Fünftel der Zeit, bis die im Inneren des Materials (2A, 2B) gemessene Temperatur 99 % der Temperaturdifferenz Tf-Ti erreicht.

9. Verfahren nach einem der vorstehenden Ansprüche,
**dadurch gekennzeichnet, dass** die im Empfangsschritt (E1) empfangene(n) Temperaturkurve(n) (C1, C2, C3, C4) aus einer öffentlichen Datenbank stammen.

10. Verfahren nach einem der vorstehenden Ansprüche,
**dadurch gekennzeichnet, dass** die Menge von Wertepaaren in Form einer Kurve dargestellt wird.

11. Vorrichtung zur Bestimmung und zur Verwendung eines Diagnoseinstruments, das mindestens ein Extremtemperatur-Antwortspektrum (SRET) für eine Vielzahl von Materialtypen umfasst, wobei das Diagnoseinstrument in der Lage ist, die Auswirkung thermischer Bedingungen zu bestimmen,
**dadurch gekennzeichnet, dass** sie mindestens die folgenden Einheiten umfasst:
- eine Empfangseinheit (8), die so ausgelegt ist, dass sie mindestens eine Temperaturkurve empfängt, wobei die Temperaturkurve (C1, C2, C3, C4) eine Schwankung der Temperatur in Abhängigkeit von der Zeit an einem gegebenen geografischen Ort darstellt;
- eine Verarbeitungseinheit (9), die Verarbeitungen iterativ für jeden einer Vielzahl von N verschiedenen Werten einer charakteristischen Zeit Tau_i durchführt, wobei N eine ganze Zahl größer als 1 ist und i eine ganze Zahl ist, die von 1 bis N schwankt, wobei die charakteristische Zeit Tau_i einem gegebenen Materialtyp (2A, 2B) zugeordnet und für diesen repräsentativ ist, wobei die Verarbeitungseinheit umfasst:
- eine erste Teileinheit (11), die so ausgelegt ist, dass sie die Temperaturkurve (C1, C2, C3, C4) mit Hilfe eines Filters erster Ordnung filtert, der als Zeitkonstante die charakteristische Zeit Tau_i aufweist, um eine sogenannte modifizierte Kurve zu erhalten;
- eine zweite Teileinheit (12), die so ausgelegt ist, dass sie aus der so bestimmten modifizierten Kurve einen Temperaturwert extrahiert, der einem temperaturspezifischen Parameter entspricht; und
- eine dritte Teileinheit (13), die so ausgelegt ist, dass sie diesen extrahierten Temperaturwert der der Iteration entsprechenden charakteristischen Zeit Tau_i zuordnet, um ein Wertepaar zu bilden,
wobei die am Ende der N Iterationen erhaltenen Wertepaare eine Menge von Wertepaaren bilden, wobei das Extremtemperatur-Antwortspektrum (SRET) mindestens die Menge von Wertepaaren umfasst, wobei die Empfangseinheit (8) und die Verarbeitungseinheit (9) so ausgelegt sind, dass eine Vielzahl von Extremtemperaturspektren (SRET) erhalten wird; und
- eine Vergleichseinheit (10), die so ausgelegt ist, dass sie auf Grundlage von mindestens zwei dieser Extremtemperatur-Antwortspektren (SRET) Vergleiche durchführt, um mindestens eine Diagnose zu erstellen.

12. Hilfsmethode zur Anpassung eines Materials an künftige thermische Belastungen,
**dadurch gekennzeichnet, dass** sie mindestens die folgenden Vorgänge umfasst:
- Durchführen einer Diagnose bezüglich des Materials (2A, 2B) an einem oder mehreren geografischen Orten, an denen es eingesetzt werden soll, unter Anwendung des Verfahrens (P) nach einem der Ansprüche 1 bis 10 und unter Verwendung einer charakteristischen Zeit, die dem Materialtyp (2A, 2B) zugeordnet ist; und
- Konzeptionieren des Materials so, dass es auf das Ergebnis dieser Diagnose abgestimmt ist.

## Claims

1. A method for determining and using a diagnostic tool comprising at least one extreme temperature response spectrum (SRET) for a plurality of equipment types, the diagnostic tool being capable of determining the effect of thermal conditions, **characterized in that** it comprises at least the following steps:
- a reception step (E1) of at least one temperature curve (C1, C2, C3, C4), the temperature curve (C1, C2, C3, C4) representing a variation in temperature as a function of time at a given geographic location;
- a processing step (E2) comprising a sequence of successive sub-steps (E2A, E2B, E2C), said sequence being performed iteratively for each of a plurality of N different values of a characteristic time Tau_i, where N is an integer greater than 1 and i is an integer ranging from 1 to N, the characteristic time Tau_i being associated with a given type of equipment (2A, 2B) and representative of the latter, said sequence of successive sub-steps comprising, for a given iteration:
• a first sub-step (E2A) consisting of filtering said temperature curve (C1, C2, C3, C4) using a first-order filter having said characteristic time Tau_i as its time constant, so as to obtain a said modified curve;
• a second sub-step (E2B) consisting of extracting from the modified curve thus obtained a temperature value corresponding to a specific temperature parameter; and
• a third sub-step (E2C) consisting of associating this extracted temperature value with the characteristic time Tau_i corresponding to the iteration, to form a pair of values,
the pairs of values obtained at the end of the N iterations forming a set of pairs, said extreme temperature response spectrum (SRET) comprising at least said set of pairs of values;
the reception step (E1) and the processing step (E2) being implemented so as to obtain a plurality of extreme temperature response spectra (SRET); and
- a comparison step (E3) consisting of performing, based on at least two of these temperature response spectra (SRET), comparisons to perform at least one diagnosis.

2. The method according to claim 1,
**characterized in that** the reception step (E1) and the processing step (E2) are performed for each of a plurality of temperature curves (C1, C2, C3, C4) allowing a plurality of extreme temperature response spectra (SRET) to be obtained, and **in that** the comparison step (E3) consists of performing comparisons based on at least two of these extreme temperature response spectra (SRET).

3. The method according to one of claims 1 and 2,
**characterized in that** the processing step (E2) is performed for a plurality of different temperature-specific parameters, thereby obtaining a plurality of extreme temperature response spectra (SRET), each of which is associated with a temperature-specific parameter, and **in that** the comparison step (E3) consists of performing comparisons based on at least two of these extreme temperature response spectra (SRET).

4. The method according to any one of the preceding claims,
**characterized in that** the specific temperature parameter corresponds to a particular, non-zero percentage of a maximum or minimum temperature.

5. The method according to claim 4,
**characterized in that** the temperature-specific parameter corresponds to one of the following temperature values:
- a percentage between 1% and 100% of the maximum temperature;
- an average temperature;
- a percentage between 1% and 100% of the minimum temperature.

6. The method according to any one of the preceding claims,
**characterized in that** the second sub-step (E2B) of the processing step (E2) performs the following operations:
- sorting the temperatures of said modified curve in an ascending order; and
- identifying, in said sorting, the temperature value corresponding to the specific temperature parameter.

7. The method according to any one of the preceding claims,
**characterized in that** it comprises a preliminary step (E0) consisting of determining, for a plurality of different equipment (2A, 2B), the associated minimum and maximum characteristic times.

8. The method according to claim 7,
**characterized in that**, in the preliminary step (E0), the characteristic time associated with a equipment (2A, 2B) is obtained from a said representative curve illustrating the temperature measured inside the equipment (2A, 2B) as a function of time, starting at the moment when said equipment (2A, 2B), which initially has an initial internal temperature Ti, is subjected to a given external temperature Tf, and **in that** the characteristic time corresponds to one of the following times:
- the time for the temperature measured inside the equipment (2A, 2B) to reach 63% of the temperature difference Tf-Ti between the external temperature Tf and the initial internal temperature Ti;
- one-third of the time for the temperature measured inside the equipment (2A, 2B) to reach 95% of the temperature difference Tf-Ti;
- one-fifth of the time for the temperature measured inside the equipment (2A, 2B) to reach 99% of the temperature difference Tf-Ti.

9. The method according to any one of the preceding claims,
**characterized in that** the temperature curve(s) (C1, C2, C3, C4), received in the reception step (E1), are derived from a public database.

10. The method according to any one of the preceding claims,
**characterized in that** said set of value pairs is represented in the form of a curve.

11. A device for determining and using a diagnostic tool comprising at least one extreme temperature response spectrum (SRET) for a plurality of equipment types, the diagnostic tool being capable of determining the effect of thermal conditions, **characterized in that** it comprises at least the following units:
- a receiving unit (8) configured to receive at least one temperature curve, the temperature curve (C1, C2, C3, C4) representing a variation in temperature as a function of time at a given geographic location;
- a processing unit (9) performing iterative processing for each of a plurality of N different values of a characteristic time Tau_i, where N is an integer greater than 1 and i is an integer ranging from 1 to N, the characteristic time Tau_i being associated with a given type of equipment (2A, 2B) and representative of the latter, said processing unit comprising:
• a first subunit (11) configured to filter said temperature curve (C1, C2, C3, C4) using a first-order filter having said characteristic time Tau_i as its time constant, so as to obtain a said modified curve;
• a second subunit (12) configured to extract from the modified curve thus determined a temperature value corresponding to a specific temperature parameter; and
• a third subunit (13) configured to associate this extracted temperature value with the characteristic time Tau_i corresponding to the iteration, to form a pair of values,
the pairs of values obtained at the end of the N iterations forming a set of pairs of values, said extreme temperature response spectrum (SRET) comprising at least said set of pairs of values, the receiving unit (8) and the processing unit (9) being configured to obtain a plurality of extreme temperature response spectra (SRET); and
- a comparison unit (10) configured to perform, based on at least two of these extreme temperature response spectra (SRET), comparisons to perform at least one diagnosis.

12. A method for assisting in the adaptation of equipment to future thermal constraints,
**characterized in that** it comprises at least the following steps:
- performing a diagnosis relating to the equipment (2A, 2B) at one or more geographic locations where it is expected to be used, by implementing the method (P) according to any one of claims 1 to 10 and using a characteristic time associated with the type of said equipment (2A, 2B); and
- a design of the equipment that is adapted to the result of said diagnosis.
